(19) Europäisches Patentamt
European Patent Office
Office européen des brevets

(11) **EP 1 655 349 B1**

(12) **EUROPEAN PATENT SPECIFICATION**

(45) Date of publication and mention
of the grant of the patent:
**28.10.2009 Bulletin 2009/44**

(21) Application number: **04747418.4**

(22) Date of filing: **13.07.2004**

(51) Int Cl.:
*C09C 3/10* (2006.01)    *C09C 1/62* (2006.01)
*C09C 1/64* (2006.01)    *C09D 5/03* (2006.01)
*C09D 5/29* (2006.01)    *C09D 201/00* (2006.01)
*C08F 220/24* (2006.01)

(86) International application number:
**PCT/JP2004/009952**

(87) International publication number:
**WO 2005/007755 (27.01.2005 Gazette 2005/04)**

(54) **FLAKE PIGMENT, COATING MATERIAL AND POWDER COATING COMPOSITION EACH CONTAINING THE SAME, AND SURFACE-TREATING AGENT FOR FLAKY PARTICLE FOR USE THEREIN**

SCHUPPENFÖRMIGES PIGMENT, ES ENTHALTENDERLACK BZW. PULVERLACK SOWIE ZUR VERWENDUNG DARIN VORGESEHENESOBERFLÄCHENBEHANDLUNGSMITTEL FÜR SCHUPPENFÖRMIGES PIGMENT

PIGMENT SOUS FORME DE PAILLETTES, MATERIAU DE REVETEMENT ET COMPOSITION DE REVETEMENT EN POUDRE CONTENANT CE PIGMENT, ET AGENT DE TRAITEMENT DE SURFACE POUR PARTICULE EN PAILLETTES ASSOCIE

(84) Designated Contracting States:
**DE FR GB**

(30) Priority: **18.07.2003 JP 2003199099**

(43) Date of publication of application:
**10.05.2006 Bulletin 2006/19**

(73) Proprietor: **TOYO ALUMINIUM KABUSHIKI KAISHA**
**Osaka-shi, Osaka 541-0056 (JP)**

(72) Inventors:
• **TAKANO, Yasushi**
**Kashihara-shi, Nara 6340007 (JP)**

• **HASHIZUME, Yoshiki,**
**c/o Toyo Aluminium K.K.**
**Osaka-shi,**
**Osaka 5410056 (JP)**

(74) Representative: **Grosse - Schumacher - Knauer - von Hirschhausen**
**Nymphenburger Strasse 14**
**80335 München (DE)**

(56) References cited:
**EP-A- 1 431 352    WO-A1-96/38506**
**JP-A- 9 296 134    JP-A- 2000 044 835**
**JP-A- 2001 029 877    JP-A- 2002 226 733**
**JP-A- 2003 213 157**

**Description**

Technical Field

The present invention relates to a flake pigment supplying a film with high brightness. More detailedly, the present invention relates to a flake pigment comprising a coat made of a resin composition containing a copolymer comprising a bond unit arising from a fluoric polymerizable monomer having alkyl fluoride groups and a bond unit arising from a polymerizable monomer having phosphate groups.

The present invention also relates to a paint and a powder paint containing the aforementioned flake pigment. The present invention further relates to a finishing agent for flake particles made of a resin composition containing the aforementioned copolymer.

Background Art

A powder paint is increasingly demanded in a large number of industrial fields of automobiles, domestic electric appliances, furniture, machine tools, business machines, building materials, toys etc. as a low-pollution paint using no organic solvent. When the powder paint is applied to a metallic finish containing a flake pigment, however, it is so difficult to arrange the flake pigment in parallel with a substrate that the color tone is darkened and no sufficient metallicity is obtained. In order to overcome this disadvantage of the powder metallic pigment composition, therefore, a large number of efforts for research and development have been made in various fields.

Generally developed methods of manufacturing powder metallic paints include melt blending of previously sufficiently kneading a metallic flake pigment with resin or a coloring pigment by a melt process and thereafter powdering the same by pulverization or the like, dry blending of mixing resin powder and a flaky pigment with each other and applying the mixture, a bonded method using resin powder containing a metallic flaky pigment bonded to the surface thereof and the like (refer to Patent Document 1, Patent Document 2, Patent Document 3 and Patent Document 4, for example).

In the melt blending, however, the flake pigment is easy to deform through the kneading step or a subsequent step of adjusting the particle size of the resin powder by pulverization or the like. Therefore, the appearance of a film obtained by applying a powder metallic paint manufactured by this method cannot be said sufficiently excellent. When the metallic pigment is prepared from aluminum particles in this method, further, active surfaces of aluminum are disadvantageously exposed in the pulverization step to increase the danger of ignition, dust explosion etc.

The dry blending has such an advantage that the metallic pigment is relatively hard to deform. However, the metallic pigment must be charged in application when the powder paint is applied by electrostatic coating, and hence the surface of the metallic pigment must be previously coated with resin if a metallic pigment of aluminum particles or the like is employed as the metallic pigment. Further, the resin powder and the metallic pigment easily separate from each other in application due to different charging rates of the metallic pigment and the resin powder. Therefore, the design property of the film is reduced while the content of the metallic paint in the powder paint varies before and after application, and hence the color tone so changes when the paint is recovered and used that it is disadvantageously impossible to recycle the paint in practice.

The bonded method includes a method of bonding the metallic pigment to the surface of the resin powder with a brush polisher or a method of bringing the resin powder into contact with a dispersion medium such as alumina balls covered with a metallic pigment for transferring and bonding the metallic pigment to the resin powder. This method has such a merit that an introduction ratio of the metallic pigment into the film is stable and the powder paint recovered without adhering to a substrate can be reused.

According to this bonded method, however, the metallic pigment and the resin powder are pressure-bonded to each other with physical stress, and hence the metallic pigment is easy to deform and it is difficult to attain excellent metallicity. While bonding (blocking) between particles of the resin powder is advantageously hardly caused due to weak bonding strength, further, it is difficult to entirely bond the metallic pigment to the resin powder and hence free particles of the metallic pigment not bonded to the resin powder remain in a large quantity.

If the quantity of the free particles of the metallic pigment is increased, the blending ratio between the resin powder and the metallic pigment changes due to the difference in bonding efficiency when the paint is recovered and used, and the paint cannot be reused after recovery similarly to that according to the dry blending. When a metallic pigment of aluminum particles or the like is employed as the metallic pigment, in addition, the danger for ignition or dust explosion is increased due to a large quantity of free particles of the metallic pigment.

The bonding strength between the resin powder and the metallic pigment is remarkably reduced particularly when the metallic pigment has a large particle size, and excellent glitter and high brightness attained only through application of the metallic pigment having a large particle size are disadvantageously hard to obtain in bonded aluminum obtained by this method.

A technique related to scaly aluminum having a surface covered with a phosphate group-containing compound is also disclosed (refer to Patent Document 5, for example). However, the aforementioned literature, describing a phosphate group-containing unsaturated monomer and styrene, also describes that a hydroxyl group-containing unsaturated monomer is essential. Protons of the hydroxyl groups are also active protons, and complicated chain transfer arises, reproducibility for the composition of a formed polymer or the like cannot be taken and the performance is unstabilized when polymerization is performed under the coexistence of the phosphate group-containing unsaturated monomer and the hydroxyl group-containing unsaturated monomer, due to the polymerization under the existence of two types of active protons having different properties. Further, this literature mentions no fluoric monomer.

While the aforementioned literature describes a polymer of a phosphate group-containing unsaturated monomer and perfluorocyclohexyl (meth)acrylate which is a fluoric monomer, it is a dispersive solution prepared by dispersing polymerizing particles with a macromolecular dispersion stabilizer that described in this literature, and the polymer is not dissolved in a solution. When covered with such a dispersive solution, an adsorbed macromolecular dispersion stabilizer layer forms the outermost layer whether micellar particulates aggregate on scaly aluminum for covering the same or micellar rupture arises for forming a coat as a film, and hence effects of the invention are disadvantageously remarkably influenced by the macromolecular dispersion stabilizer.

While there are various methods for manufacturing powder metallic paints as described above, no method can provide a film sufficiently satisfactory both in metallicity and brightness.

From the aforementioned point of view, the inventor has invented a method employing an aluminum flake pigment having a surface covered with fluororesin whose surface contains alkyl fluoride groups in molecules (refer to Japanese Patent Laying-Open No. 2003-213157 (Japanese Patent Application No. 2002-013212), for example). This method can arrange the aluminum flake pigment in parallel with a substrate by floating the aluminum flake pigment on the surface of a film through inferiority of affinity of the alkyl fluoride group with respect to other substances, and attains excellent metallicity despite powder coating.

However, secondary adhesiveness is so disadvantageously inferior due to the inferior affinity of the alkyl fluoride group with respect to other substances that an overcoat layer is easy to separate when an overcoat is cleared or a mending layer is easy to separate when a flaw etc. of the film is mended with the same paint.

While development of a powder paint improved in metallicity, brightness etc. of a film with excellent secondary adhesiveness is strongly demanded from the aforementioned point of view, no such powder paint has yet been improved.

Patent Document 1: Japanese Patent Laying-Open No. 51-137725
Patent Document 2: Japanese Patent Publication No. 57-35214
Patent Document 3: Japanese Patent Laying-Open No. 9-71734
Patent Document 4: Specification of U.S. Patent No. 4,138,511
Patent Document 5: Japanese Patent Laying-Open No. 2001-29877
Patent Document 6: Japanese Patent Laying-Open No. 2003-213157

Disclosure of the Invention

Problems to be Solved by the Invention

Accordingly, a principal object of the present invention is to provide a flake pigment preferably usable in a powder paint, supplying a film with excellent metallicity and high brightness and further providing excellent secondary adhesiveness.

Another object of the present invention is to provide a paint supplying a film with excellent metallicity and high brightness and further providing excellent secondary adhesiveness.

Another object of the present invention is to provide a powder paint supplying a film with excellent metallicity and high brightness and further providing excellent secondary adhesiveness.

Still another object of the present invention is to provide a finishing agent for flake particles for manufacturing a flake pigment preferably usable in a powder paint, supplying a film with excellent metallicity and high brightness and further providing excellent secondary adhesiveness.

Means for Solving the Problems

In order to solve the problems of the prior art, the inventor has studied various devises and deeply made research and development as to the composition of a resin composition covering the surfaces of flake particles employed as base particles of a metallic pigment.

Consequently, the inventor has found that a flake pigment preferably usable in a powder paint, supplying a film with excellent metallicity and high brightness and further providing excellent secondary adhesiveness can be obtained by covering the surfaces of flake particles with coats made of a resin composition containing a copolymer comprising a bond unit arising from a fluoric polymerizable monomer having alkyl fluoride groups and a bond unit arising from a polymerizable monomer having phosphate groups, and completed the present invention.

The flake pigment according to the present invention is a flake pigment comprising base particles composed of flake particles and a single-layer or double-layer coat covering the surface of each base particle, and at least one layer of this single-layer or double-layer coat is made of a resin composition containing a copolymer comprising a bond unit arising from a fluoric polymerizable monomer having alkyl fluoride groups and a bond unit arising from a polymerizable monomer having phosphate groups.

This copolymer may be a copolymer comprising the bond unit arising from the fluoric polymerizable monomer having alkyl fluoride groups and the bond unit arising from the polymerizable monomer having phosphate groups, as well as at least a bond unit arising from a polymerizable monomer other than the bond units.

This fluoric polymerizable monomer having alkyl fluoride groups may be perfluorooctylethyl acrylate, and this polymerizable monomer having phosphate groups may be 2-methacryloyloxyethyl acid phosphate or 2-acryloyloxyethyl acid phosphate.

Further, at least one bond unit arising from the polymerizable monomer other than the bond unit arising from the fluoric polymerizable monomer having alkyl fluoride groups and the bond unit arising from the polymerizable monomer having phosphate groups may be styrene or methyl methacrylate.

In this copolymer, in addition, the content of this bond unit arising from the fluoric polymerizable monomer having alkyl fluoride groups may be in the range of 1 to 40 mol %, the content of this bond unit arising from the polymerizable monomer having phosphate groups may be in the range of 1 to 30 mol % and the number average molecular weight may be in the range of 1000 to 500000.

This copolymer may be a copolymer soluble in a solvent.

These flake particles may be flake particles composed of a material containing aluminum or an aluminum alloy.

The paint according to the present invention is a paint containing the aforementioned flake pigment and a binder.

Or, the powder paint according to the present invention is a powder paint containing the aforementioned flake pigment and thermosetting resin powder.

Further, the powder paint according to the present invention may be a powder paint containing thermosetting resin powder prepared by bonding the aforementioned flake pigment to the surface through a binder having viscosity.

Further, the finishing agent for flake particles according to the present invention is a finishing agent for flake particles comprising a resin composition containing a copolymer comprising a bond unit arising from a fluoric polymerizable monomer having alkyl fluoride groups and a bond unit arising from a polymerizable monomer having phosphate groups.

Effects of the Invention

From the aforementioned results, the flake pigment according to the present invention is a flake pigment preferably usable in a powder paint, supplying a film with excellent metallicity and high brightness and further providing excellent secondary adhesiveness.

The paint according to the present invention is a paint supplying a film with excellent metallicity and high brightness and further providing excellent secondary adhesiveness.

Further, the powder paint according to the present invention is a powder paint supplying a film with excellent metallicity and high brightness and further providing excellent secondary adhesiveness.

The finishing agent according to the present invention is a finishing agent for flake particles for manufacturing a flake pigment preferably usable in a powder paint, supplying a film with excellent metallicity and high brightness and further providing excellent secondary adhesiveness.

The aforementioned and other objects, features, aspects and advantages of the present invention will be clarified from the following detailed description of the present invention.

Best Modes for Carrying Out the Invention

<Flake Pigment>

The flake pigment according to the present invention is desirably a flake pigment comprising base particles composed of flake particles and a single-layer or double-layer coat covering the surface of each base particle, and at least one layer of this single-layer or double-layer coat is made of a resin composition containing a copolymer comprising a bond unit arising from a fluoric polymerizable monomer having alkyl fluoride groups and a bond unit arising from a polymerizable monomer having phosphate groups.

<Flake Particles>

While the flake particles employed for the present invention are not particularly restricted, metallic flakes of aluminum, zinc, copper, bronze, nickel, titanium, stainless and the like and alloy flakes thereof can be listed, and aluminum flakes, excellent in metallic luster, low-priced and easy to treat due to small specific gravity, are particularly preferable among these pigments.

The average particle size of the aluminum flakes employed for the present invention is preferably about 1 to 100 μm in general, and more preferably 3 to 60 μm. The average thickness is preferably about 0.01 to 5 μm in general, and more preferably 0.02 to 2 μm.

There is such a tendency that the flake particles project on the surface of a film to smoothness or sharpness of the painted surface if the average particle size exceeds 100 μm, while there is such a tendency that metallicity or brightness is reduced if the average particle size is less than 1 μm. There is such a tendency that smoothness or sharpness of the painted surface is reduced and the manufacturing cost may be increased if the average thickness exceeds 5 μm, while not only there is such a tendency that strength is reduced but also working in manufacturing steps may be rendered difficult if the average thickness is less than 0.01 μm.

The average particle size of the flake particles is obtained by calculating a volume mean from particle size distribution measured by a particle size distribution measuring method such as laser analysis, micromesh sieving, a Coulter counter method or the like. The average thickness is calculated from obscuring power and density of a flake metallic pigment.

A grinding assistant added in grinding may be adsorbed to the surfaces of the aluminum flakes employed for the present invention. For example, aliphatic acid (oleic acid or stearic acid), aliphatic amine, aliphatic amide, aliphatic alcohol, an ester compound or the like can be listed as the grinding lubricant. This grinding lubricant has an effect of suppressing unnecessary oxidation of the aluminum flake surfaces and improving gloss. The quantity of adsorption is preferably less than 2 parts by mass with respect to 100 parts mass of aluminum flakes. If the quantity of adsorption is in excess of 2 parts by mass, surface gloss may be reduced.

In order to supply the flake particles employed for the present invention with various colors, any type of coloring agent or coloring pigment may be bonded to the surfaces of the flake particles.

While the coloring agent or coloring pigment is not particularly restricted, quinacridone, diketopyrrolopyrrole, isoindolinone, indanthrone, perylene, perynone, anthraxquinone, dioxazine, benzoimidazolone, triphenylmethane quinophthalone, anthrapyrimidine, chrome yellow, pearl mica, transparent pearl mica, colored mica, interference mica, phthalocyanine, phthalocyanine halide, azo pigment (azomethine metal complex, condensation azo or the like), titanium oxide, carbon black, iron oxide, copper phthalocyanine, condensation polycyclic pigment or the like can be listed, for example.

While a method of bonding the coloring pigment to the flake particles employed for the present invention is not particularly restricted, a method of bonding the coloring pigment to the flake particles by coating the coloring pigment with a dispersant and thereafter stirring/mixing the same with the flake particles in a nonpolar solvent is preferable.

Aromatic carboxylic acid such as benzoic acid, vinyl benzoate, salicylic acid, anthranilic acid, m-aminobenzoic acid, p-aminobenzoic acid, 3-amino-4-methylbenzoic acid, 3,4-diaminobenzoic acid, p-aminosalicylic acid, 1-naphthoic acid, 2-naphthoic acid, naphthenic acid, 3-amino-2-naphthoic acid, cinnamic acid or aminocinnamic acid; an amino compound such as ethylenediamine, trimethylenediamine, tetramethylenediamine, pentamethylenediamine, hexamethylenediamine, 1,7-diaminoheptane, 1,8-diaminooctane, 1,10-diaminodecane, 1,12-deaminododecane, o-phenylenediamine, m-phenylenediamine, p-phenylenediamine, 1,8-diaminonaphthalene, 1,2-diaminocyclohexane, stearyl propylenediamine, N-β-(aminoethyl)-γ-aminopropyl trimethoxysilane or N-β-(aminoethyl)-γ-aminopropyl methyldimethoxysilane; aluminum or a titanium chelate compound is preferably used.

Similarly, interference films or the like can be formed on the surfaces of the flake particles, in order to supply the flake particles employed for the present invention with various colors. While the method therefor is not particularly restricted, a method of forming airing films on the surfaces by heating metallic flakes in an atmosphere having a controlled oxygen content to about 300 to 700˚C or a method of coating a flake metallic pigment with a precursor of an oxide of a transition metal or the like and heating/decomposing the same is preferable in order to form optically interferential oxide films on individual particle surfaces of the metallic flakes, for example.

In order to supply the flake particles employed for the present invention with chemical resistance, water resistance or weather resistance, another resin layer can be formed between the resin composition disclosed in the present invention and the flake particles if necessary. While the method therefor is not particularly restricted, a method of polymerizing a monomer and depositing a polymer on the surfaces of the metal flakes by adding a polymerizable monomer to slurry prepared by dispersing the metallic flakes in an organic solvent and adding a polymerization initiator such as azobisisobutylonitrile or benzoyl peroxide while heating the slurry in an inert gas atmosphere is preferable.

For example, acrylic acid, methacrylic acid, methyl methacrylate, butyl acrylate, 2-ethylhexyl acrylate, lauryl acrylate, stearyl acrylate, cyclohexyl acrylate, 2-hydroxyethyl acrylate, 2-hydroxybutyl acrylate, 2-methoxyethyl acrylate, 2-diethylaminoethyl acrylate, butyl methacrylate, octyl methacrylate, 1,4-butandiol diacrylate, 1,6-hexanediol diacrylate, 1,9-nonanediol diacrylate, neopentylglycol diacrylate, tripropyleneglycol diacrylate, tetraethyl glycol diacrylate, trimethylolpropane triacrylate, tetramethylolmethane tetraacrylate, pentaerythritol triacrylate, trisacryloxyethyl phosphate, ditrimethylolpropane tetraacrylate, styrene, $\alpha$-methylstyrene, vinyltoluene, divinylbenzene, acrylonitrile, methacrylonitrile, vinyl acetate, vinyl propionate, maleic acid, crotonic acid, itaconic acid, polybutadiene, linseed oil, soybean oil, epoxidized soybean oil, epoxidized polybutadiene, cyclohexene vinyl monoxide, divinylbenzene monoxide or the like can be used as the aforementioned polymerizable monomer.

The flake particles employed for the present invention may be prepared from mica, surface decoration mica, glass flakes, surface decoration glass flakes, pearl, alumina flakes, colored alumina flakes, silica flakes, colored silica flakes, iron oxide flakes, graphite flakes, hologram pigment flakes and/or a flake pigment composed of a cholesteric liquid crystal polymer singly or in at least two types, or in combination with the aforementioned metallic flakes.

<Fluoric Polymerizable Monomer Having Alkyl Fluoride Group>

The alkyl fluoride group in the copolymer molecular structure in the present invention plays a role of floating the flake pigment to which this copolymer is adsorbed on the surface of the film through the inferior affinity of the alkyl fluoride group with respect to other substances. According to this effect, the flake pigment can be arranged in parallel with the substrate, for attaining excellent metallicity.

The fluoric polymerizable monomer having alkyl fluoride groups mentioned here is a monomer capable of condensation polymerization or addition polymerization (radical polymerization, anion polymerization, cation polymerization or ring-opening polymerization) containing alkyl fluoride groups in a polymer skeleton obtained as a result of polymerization. The part of the alkyl fluoride group may be either part or all of the main chain or part or all of the side chain, and is not particularly restricted.

The aforementioned fluoric polymerizable monomer having alkyl fluoride groups may be a polymerizable monomer having cyclic alkyl fluoride groups or a polymerizable monomer having a straight-chain alkyl fluoride groups.

Tetrafluoroethylene, chlorotrifluoroethylene, vinylidene fluoride, vinyl fluoride, hexafluoropropylene, hexafluoropropylene oxide or the like can be listed as a fluoric polymerizable monomer providing a polymer having alkyl fluoride groups part constituting part or all of the main chain.

While methacrylic acid or acrylic ester of perfluoroalkyl alcohol or perfluoroalkyl vinyl ether can be listed as a fluoric polymerizable monomer having an alkyl fluoride group part constituting part or all of the side chain and trifluoroethyl methacrylate, 2,2,3,3-tetrafluoropropyl methacrylate, 2,2,3,4,4,4-hexafluorobutyl methacrylate, perfluorooctylethyl methacrylate, trifluoroethyl acrylate, 2,2,3,3-tetrafluoropropyl acrylate, 2,2,3,4,4,4-hexafluorobutyl acrylate, perfluorooctylethyl acrylate, perfluoropropyl vinyl ether or the like can be more specifically listed, the present invention is not restricted to this.

<Polymerizable Monomer Having Phosphate Group>

The phosphate group in the copolymer molecular structure in the present invention plays a role of adsorbing this copolymer to the flake particles through excellent adsorbability of the phosphate group. The phosphate group can improve secondary adhesiveness at the same time. The phosphate group exhibiting excellent adsorbability with respect to the flake particles can coat the flake particles with the copolymer through adsorption, and neither long reaction time nor complicated polymerization process may be required every type of flake particles as compared with conventional polymeric resin coating but an advantageous process can be proposed in consideration of industrial manufacturing. The copolymer may be directly supplied to the flake particles by polymeric resin coating similarly to the prior art, as a matter of course.

The polymerizable monomer having phosphate groups mentioned here is a monomer capable of condensation polymerization or addition polymerization (radical polymerization, anion polymerization or cation polymerization) containing phosphate groups in a polymer skeleton obtained as a result of polymerization.

A compound having at least one polymeric unsaturated bond and at least one phosphate group in the same molecule can be listed as a monomer corresponding to this. More specifically, (meth)acryloyloxyalkyl acid phosphate such as 2-methacryloyloxyethyl acid phosphate, 2-acryloyloxyethyl acid phosphate, 2-acryloyloxypropyl acid phosphate, 2-methacryloyloxypropyl acid phosphate, 10-acryloyloxydecyl acid phosphate or 10-methacryloyloxydecyl acid phosphate is preferable (alkyl chain: carbon number 2 to 20). Further, an equimolar adduct of glycidyl (meth)acrylate and monoalkyl (carbon number 1 to 20) phosphate can also be used as a phosphate group-containing unsaturated monomer. However, the present invention is not restricted to this.

<Solvent>

The copolymer in the present invention must be soluble in a solvent when coating the surfaces of the flake particles by adsorption as a finishing agent. Therefore, each the aforementioned fluoric polymerizable monomer having alkyl fluoride groups and the polymerizable monomer having phosphate groups is preferably a monomer (monofunctional monomer) having only one polymerization activating site in one molecule, and the obtained polymer is desirably a linear skeleton polymer.

When a plurality of polymerization activating sites are present, the monomer is generally three-dimensionally crosslinked to be insoluble in all solvents. Also when a plurality of polymerization activating sites are present, however, the monomer becomes a branched skeleton polymer if the molar fraction thereof is extremely low, and a soluble solvent may be present in this case.

In the present invention, the polymer skeleton structure such as a linear or branched structure is not particularly restricted but the point is that a soluble solvent may be present. The solvent is not particularly restricted so far as the same exerts no influence on the treated flake particles.

<Other Polymerizable Monomer>

In the present invention, the copolymer may be a copolymer of the fluoric polymerizable monomer having alkyl fluoride groups and the polymerizable monomer having phosphate groups, as well as at least one polymerizable monomer other than these monomers.

The third component polymerizable monomer is added for improving solubility. Protons of OH provided in the phosphate groups are active protons, which are conceivably extremely chain-transferable following radical polymerization. If no third component monomer is present, therefore, radical growth terminals easily chain-transfer to the phosphate groups of the already polymerized polymer to be insoluble. While this problem can conceivably be solved by employing polymerization such as ion polymerization, for example, other than the radical polymerization, the radical polymerization is preferable in consideration of simplicity of polymerization.

It is impractical to suppress insolubilization without a third component in radical polymerization since the monomer concentration must be extremely reduced in polarization and the yield is also extremely reduced. The third component monomer is so utilized as to obtain a polymer insoluble in radical polymerization and exhibiting a yield allowable in a practical range.

The third component monomer, which is added for the purpose of preventing insolubilization resulting from crosslinking, is preferably a monomer (monofunctional monomer) having only one polymerization activating site in one molecule, similarly to the aforementioned two types of monomers.

While ethylene, propylene, butene, isobutene, vinyl chloride, vinyl bromide, vinyliden chloride, acrylonitrile, methacrylonitrile, vinylidene cyanide, vinyl acetate, methyl acrylate, methyl methacrylate, acrylic acid, methacrylic acid, styrene, acrylamide, methyl vinyl ketone, phenyl vinyl ketone, methyl vinyl ether, phenyl vinyl ether, phenyl vinyl sulfide, N-vinylpyrrolidone, N-vinyl carbazole or the like can be listed as a monomer corresponding to this condition, the present invention is not restricted to this.

On the premise that radical polymerization and a third component are used, the compositions of the fluoric polymerizable monomer having alkyl fluoride groups and a phosphate group-containing polymerizable monomer in the polymer are preferably 1 to 40 mol % and 1 to 30 mol % respectively, and the number average molecular weight is preferably 1000 to 500000.

The polymer obtained by polymerization tends to be insolubilized if the compositions exceed the upper limits. The appearance of the film such as metallicity or brightness tends to remarkably lower if the compositions do not satisfy the lower limits. If the number average molecular weight is less than 1000, adsorbability is reduced to remarkably reduce metallicity of the film. If the number average molecular weight exceeds 500000, the treated flake pigment tends to aggregate when dispersed in a poor solvent, to be improper as a powder coating pigment.

<Method of Coating Surfaces of Flake Particles with Copolymer>

A. Method of Individually Performing Copolymerization and Surface Coating

A-1. Method of Synthesizing Copolymer

While the aforementioned monomers may be copolymerized in order to synthesize the copolymer in the present invention, the polymerization method is not particularly restricted. While addition polymerization (radical polymerization, cation polymerization, anion polymerization or ring-opening polymerization) or condensation polymerization can be listed as the polymerization method, simply performable radical polymerization is preferable. While the radical polymerization includes various techniques such as bulk polymerization, solution polymerization, emulsion polymerization and emulsion polymerization, the means thereof is not restricted in the present invention.

However, the copolymer in the present invention must be soluble in a solvent when coating the surfaces of the flake particles by adsorption as a finishing agent, and homogeneous solution polymerization is recommended from this point of view. The following description for illustrating the present invention in more detail is restricted to radical homogeneous solution polymerization employing a third component.

The solvent usable for polymerization, considered on the premise of homogeneous solution polymerization, may be a solvent capable of solving all types of used monomers and the formed polymer and is not particularly restricted. In general, a polymerizable monomer having phosphate groups has high polarity and is not readily dissolved in a nonpolar solvent. Therefore, ketone such as acetone, methyl ethyl ketone or cyclohexanone, ester such as ethyl acetate or methyl acetate or alcohol having C of not more than 4 is preferable, while the present invention is not restricted to this in particular. The content of the solvent preferably corresponds to 5 to 50 % in terms of the monomer concentration in the polymerization solution. The polymer yield is extremely reduced if the content is less than 5 %, while the copolymer gelates to be easily insolubilized if the content exceeds 50 %.

A polymerization initiator is not particularly restricted so far as the same is soluble in the solvent selected in the above. While azobisisobutylonitrile (AIBN), benzoyl peroxide (BPO) or cumene hydroperoxide can be illustrated, the present invention is not restricted to this.

The content, not restricted either, is preferably in the range of 0.1 to 10 %. The polymer yield is extremely reduced if the content is less than 0.1 %, while the copolymer is oligomerized if the content exceeds 10 %.

The proper range of the reaction temperature depends on the type of the used initiator. For example, the aforementioned example is an initiator belonging to a category referred to as an intermediate temperature initiator, and a preferable reaction temperature is 40 to 100˚C. No polymerization progresses if the reaction temperature is less than 40˚C, while the initiator is so quickly decomposed that reaction is hardly controllable if the reaction temperature exceeds 100˚C. The type of the initiator is not restricted as a matter of course, and hence the reaction temperature is not restricted either.

The proper range of the reaction time depends on the type of the initiator and the reaction temperature. The half life of the initiator is univocally decided when the type of the initiator and the reaction temperature are decided. 0.2 to 4 times the half life is preferable as the reaction time. While the polymer yield is remarkably reduced if the reaction time is less than 0.2 times the half life and the yield is not much increased if reaction is continued for a period exceeding 4 times the half life, the present invention is not restricted to this.

In the present invention, a method of recovering/purifying the polymerized polymer is not particularly restricted either. The present invention can be achieved also with employment of a not particularly purified polymerization reaction solution. While general reprecipitation, freeze drying, column separation or extraction can be used in a case of performing purification/recovery, the reprecipitation is simple and preferable. The following description for illustrating the present invention in more detail is restricted to the reprecipitation.

A poor solvent used for reprecipitation must not dissolve the formed polymer. Further, that dissolving unreacted monomers is preferable. A precipitated polymer contains unreacted monomers when a solvent not dissolving but precipitating or phase-separating the unreacted monomers is used, and hence the unreacted monomers must be separately extracted/removed with a solvent not dissolving the formed polymer but dissolving the unreacted monomers.

While alcohol having C of not more than 3 such as ethanol, methanol or propyl alcohol can be illustrated as a preferable example of this solvent along with illustration of alkane such as hexane, heptane or Merveille, the present invention is not restricted to this. In particular, the solvent satisfying the aforementioned condition varies with the monomer types, and hence the same cannot be restricted.

The type and the quantity of the poor solvent used for reprecipitation and the quantity of the introduced polymer solution must be controlled on a case-by-case basis in response to the property, concentration etc. of the formed polymer. The method of this control is similar to that in general polymer reprecipitation purification.

A-2. Surface Coating

In a method individually performing copolymerization and surface coating, a finishing agent obtained by copolymerization is first dissolved in a soluble solvent, added to the flake particles and kneaded. When unpurified polymerization reaction solution is employed as such, the finishing agent may be added as such or may be added after the same is diluted with a diluent solvent. At this time, the flake particles may be solventless powder or paste containing a solvent. The content of the finishing agent is preferably 0.1 mass % to 5 mass % with respect to the flake particles. The effects of the invention insufficiently appear if the content is less than 0.1 mass %, while aggregation so easily arises in a subsequent pulverization step that a practical powder metallic pigment is hard to obtain if the content exceeds 5 %. However, the content of the finishing agent is not restricted to this. The solvent is not particularly restricted so far as the same dissolves the finishing agent and exerts no influence on the flake particles.

The quantity of the solvent is preferably 10 mass % to 400 mass % with respect to the flake particles (nonvolatile). Homogeneous kneading is difficult if the quantity is less than 10 mass %, while the poor solvent must be used in a large quantity in a dispersion step described later if the quantity exceeds 400 mass %. When paste containing the solvent is used for raw flake particles, however, the necessary quantity of the solvent must be calculated with attention. Since the finishing agent solution and the paste are kneaded with ach other, the solvent forms a mixed solvent in a mixture system. If this mixed solvent has no composition dissolving the finishing agent, the polymer precipitates during kneading to inhibit homogeneous adsorption. Therefore, the quantity of the solvent cannot be unconditionally restricted.

Phosphate group parts in the finishing agent molecules conceivably adsorb to the flake particles in the aforementioned kneading step. While the adsorption can conceivably be rendered more reliable by a technique of aging the paste after completion of the kneading or performing warm kneading or warm aging, the effects of the present invention appear without specific operation, and hence the present invention is not restricted to this in particular.

In order to pulverize the aforementioned finishing agent-containing paste, a technique of dispersing the paste in the poor solvent, filtrating the same and drying the same is recommended. If the aforementioned finishing agent-containing paste is dried as such, the flake particles stick to each other and aggregate. While the flake particles can be sufficiently utilized when repulverized, this leads to such a disadvantage that the flake particles are partially deformed in pulverization. While the aforementioned problem of aggregation can be avoided by cleaning the flake particles with a good solvent and drying the same, the adsorbed polymer is also gradually washed out and the effects of the present invention are also gradually reduced.

The aforementioned problem can be avoided by gradually introducing the finishing agent-containing paste into a large quantity of poor solvent under strong stirring for preparing slurry, filtrating the same and drying the same. In other words, the flake particles are dispersed in the dispersed solvent, not to come into contact with each other. At the same time, the poor solvent extracts the good solvent and the adsorbed polymer is precipitated on the surfaces of the flake particles as a solid, and hence the particles do not stick to each other upon recontact. Alkane such as hexane, heptane or Merveille is preferable as the poor solvent in this case. While this method is recommended, however, this step is not essential for completing the present invention as hereinabove described, and hence the pulverization method is not restricted.

B. Method of Simultaneously Performing Copolymerization and Surface Coating

According to the present invention, it is also possible to employ a method (the so-called resin coating) of coating the surfaces of the flake particles by employing conventional resin coating simultaneously performing copolymerization and surface coating.

For example, a method of coating flake particles comprising the steps of obtaining slurry by dispersing the flake particles in an organic solvent, obtaining a reaction solution by adding the raw monomers employed for the present invention into the obtained slurry and precipitating a copolymer on the surfaces of the flake particles by adding a polymerization initiator while heating the obtained reaction solution in an inert gas atmosphere thereby polymerizing the raw monomers can be listed.

While the solvent for dispersing the flake particles is not particularly restricted in the aforementioned method of coating flake particles, a solvent dissolving the raw monomers employed for the present invention is preferable. For example, an ester solvent such as ethyl acetate or butyl acetate, a ketone solvent such as acetone, methyl isobutyl ketone or cyclohexanone, an alcohol solvent such as methanol, ethanol, buthanol, glycerin or polyethylene glycol or the like can be listed. This solvent may be employed singly, or at least two types of these solvents may be mixed with each other.

The quantity of this solvent is preferably at least 300 parts by mass with respect to 100 parts by mass of the flake particles, and more preferably at least 400 parts by mass in particular. Further, this quantity is preferably not more than 200 parts by mass, and more preferably not more than 800 parts by mass in particular. There is such a tendency that the viscosity of the reaction solution is so excessively increased that it is difficult to homogeneously disperse the reaction components if this quantity is less than 300 parts by mass, while there is such a tendency that the monomer concentrations are so reduced that a large quantity of unreacted monomers remain also when the reaction time is increased if this quantity exceeds 1200 parts by mass.

The polymerization initiator employed in the aforementioned method of coating flake particles is not particularly restricted but that generally known as a radical generator can be employed. More specifically, peroxide such as benzoyl peroxide, lauroyl peroxide, isobutyl peroxide or methyl ethyl ketone peroxide or an azo compound such as AIBN can be listed.

The quantity of the polymerization initiator is preferably at least 0.1 parts by mass with respect to 100 parts by mass of the charged monomers, and more preferably at least 0.5 parts by mass in particular. Further, this quantity is preferably not more than 10 parts by mass, and more preferably not more than 8 parts by mass in particular. Such a problem may arise that no polymerization reaction progresses and no coat of a planed quantity is formed if this quantity is less than 0.1 parts by mass, while there is such a tendency that polymerization so rapidly progresses that adsorption of the formed polymer to the flake particles cannot follow but free polymer particles are formed and viscosity of the overall system is abruptly increased to lead to solidification as the case may be if this quantity exceeds 10 parts by mass.

In the aforementioned method of coating flake particles, the temperature of polymerization reaction is defined by the type of the used initiator. The half life of the initiator univocally depends on the temperature, while a temperature setting the half life of the initiator to at least 5 minutes is preferable, and a temperature setting the same to at least 15 minutes is more preferable in particular.

As to this temperature, a temperature setting the half life of the initiator to not more than 20 hours is preferable, and a temperature setting the same to not more than 10 hours is more preferable in particular. When AIBN is employed as the initiator, for example, half lives are 22, 5, 1.2 and 0.3 hours at 60, 70, 80 and 90°C respectively, and the range of 70 to 90°C is a more preferable temperature range. Such a problem may arise that polymerization reaction too slowly progresses if this reaction temperature is less than the preferable temperature range, while there is such a tendency that polymerization reaction so rapidly progresses that adsorption of the formed polymer to the flake particles cannot follow but free polymer particles are formed and viscosity of the overall system is abruptly increased to lead to solidification as the case may be if this quantity exceeds the preferable temperature range.

<Paint>.

The paint according to the present invention contains the flake pigment according to the present invention and a binder.

The paint according to the present invention is not restricted to a powder paint but may be a general solvent type paint containing a solvent, or a water paint containing water.

The binder employed in the paint according to the present invention is not particularly restricted but a binder generally employed for a paint containing a metallic pigment can be preferably used. More specifically, acrylic resin, polyester resin, alkyd resin, epoxy resin, fluororesin, lacquer hardened by natural drying, two-part polyurethane resin or silicone resin can be listed, and transparent resin is further preferable. This binder may be employed singly, or at least two types of such binders may be mixed with each other.

When the paint according to the present invention contains a solvent, the composition of the solvent is not particularly restricted but a solvent generally employed for a paint containing a metallic pigment is usable. More specifically, an aliphatic hydrocarbon solvent such as hexane, heptane, cyclohexane or octane, an aromatic hydrocarbon solvent such as benzene, toluene or xylene, a mixed solvent of aliphatic hydrocarbon and aromatic hydrocarbon such as mineral spirit, a halogenated hydrocarbon solvent such as chlorobenzene, trichlorobenzene, perchloroethylene or trichloroethylene, alcohol such as methanol, ethanol, n-propyl alcohol or n-butanol, ketone such as n-propanone or 2-butanone, a solvent composed of ester such as ethyl acetate or propyl acetate, a solvent composed of ether such as tetrahydrofuran, diethylether or ethyl propyl ether can be listed. At least two types of these solvents are preferably mixed with each other, and the composition of the solvent is decided in consideration of solubility in the binder for the paint, film forming characteristics, coating workability etc.

The paint according to the present invention, which can provide a film exhibiting excellent brightness without containing a coloring pigment or the like in addition to the flake pigment coated with the copolymer according to the present invention, may also contain another coloring pigment. In this case, various color tones which cannot be obtained singly with the flake pigment according to the present invention can be provided.

In the paint according to the present invention, a coloring pigment usable in addition to the flake pigment coated with the finishing agent according to the present invention is not particularly restricted but a coloring pigment generally employed for a paint containing a metallic pigment is usable. More specifically, phthalocyanine, halogenated phthalocyanine, quinacridone, diketopyrrolopyrrole, isoindolinone, azomethine metal complex, indanthrone, perylene, perynone, anthraxquinone, dioxazine, benzoimidazolone, condensation azo, triphenylmethane, quinophthalone, anthrapyrimidine, titanium oxide, iron oxide, zinc white, cobalt blue, ultramarine blue, chrome yellow, carbon black or pearl mica can be listed.

Various additives such as a dispersant, a hardener, an ultraviolet absorber, a static eliminator, a thickener, a coupling agent, a plasticizer, an antioxidant, a glazing agent, a synthetic preserver, a lubricant and a filler can be added to the paint according to the present invention if necessary at a degree not damaging the various colors and excellent brightness of the film.

A powder paint containing the flake pigment coated with the finishing agent according to the present invention includes thermosetting resin powder. The thermosetting resin powder is not particularly restricted but thermosetting resin powder of a resin composition ,containing resin melted by heating and thereafter quickly hardened, exerting no influence on the finishing agent according to the present invention can be employed.

In other words, well-known thermosetting resin powder for powder coating can be particularly preferably employed as the thermosetting resin powder employed for the present invention. More specifically, powder of a resin composition containing acryl resin or polyester resin can be listed. A hardener, a dispersant or the like may be added to the thermosetting resin powder employed for the powder paint according to the present invention if necessary.

The hardener addable to the thermosetting resin powder employed for the present invention is not particularly restricted by a well-known hardener is employable. More specifically, amine, polyamide, dicyandiamide, imidazole, dihydrazid carboxylate, anhydride, polysulfide, boron trifluoride, amino resin, triglycidyl isocyanate, primide, epoxy resin, other dibasic acid, imidazoline, hydrazid or an isocyanate compound can be listed. This hardener can be employed singly, or at least two types of these hardeners may be mixed with each other. Further, this hardener can be employed along with an accelerator if necessary.

The dispersant addable to the thermosetting resin powder employed for the present invention is not particularly restricted but a well-known dispersant is employable. More specifically, a surface active agent such as ester phosphate, amine, polyoxyethylene alkyl ether, polyoxyethylene alkyl phenyl ether or the like can be listed. This dispersant may be employed singly, or at least two types of the dispersants may be mixed with each other.

In addition to the above, a filler such as calcium carbonate, barium sulfate or talc, a flowability regulator such as silica, alumina or aluminum hydroxide, a colorant such as titanium oxide, carbon black, iron oxide, copper phthalocyanine, azo pigment or condensation polycyclic pigment, a flow-out agent such as acryl oligomer or silicone, a foaming inhibitor such as benzoin, an additive such as wax, a coupling agent, an antioxidant or magnetic powder and a functional material may be further added to the thermosetting resin powder employed for the powder paint according to the present invention if necessary.

The average particle diameter of the thermosetting resin powder employed for the powder paint according to the present invention, which is not particularly restricted, is preferably at least 5 $\mu$m, and more preferably at least 15 $\mu$m in particular. Further, this average particle diameter is preferably not more than 100 $\mu$m, and more preferably not more than 60 $\mu$m in particular. If this average particle diameter is less than 5 $\mu$m, homogenous dusting is so difficult in powder coating that a lump of resin may adhere to a painted plate to damage smoothness. If this average particle diameter exceeds 100 $\mu$m, there is such an apprehension that smoothness of the surface of a powder-coated film is inhibited and no excellent appearance is obtained.

In the powder paint according to the present invention, the content of the metallic pigment according to the present invention is preferably at least 1 part by mass with respect to 100 parts by mass of the thermosetting resin powder employed for the present invention, and more preferably at least 2 parts by mass in particular. Further, this content is preferably not more than 40 parts by mass, and more preferably not more than 20 parts by mass in particular. If this content is less than 1 part by mass, there is such an apprehension that no sufficient metallicity and brightness are obtained and there is such a tendency that the thickness of a film must be increased for obscuring the substrate. If this content exceeds 40 parts by mass, there is such a tendency that the cost is increased, smoothness of the film is lost and the appearance is deteriorated.

In order to evaluate the flake pigment treated with the finishing agent according to the present invention as that for a powder paint, a painted plate can be obtained by simply dry-blending the same with powder coating thermosetting resin powder and performing powder coating, while the same can also be powder-coated as bonded aluminum by performing a bonded operation. While a method (refer to the pamphlet of International Laying-Open No. 02/094950A1, for example) proposed by the inventor et al., for example, is recommended as to manufacturing of bonded aluminum, the present invention is not restricted to this.

A binder having viscosity dissolved in a solvent is added to and kneaded with resin powder and the flake pigment previously homogeneously mixed with each other. The kneading is continued until the solvent is evaporated and the whole is powdered, the solvent is completely removed and thereafter classification is performed through an air sifter (screen) for obtaining a powder paint for metallic coating. Bonding strength between the flake pigment and the resin powder can be increased by using the binder, and blocking between particles of the resin powder can be suppressed by simultaneously performing the kneading and distillation of the solvent. While it is also possible to continuously carry out the step of homogeneously mixing the flake pigment and the resin powder with each other and the subsequent step of kneading/drying the binder having viscosity in the same apparatus such as a vacuum kneader mixer, the homogeneous mixing step and the step of kneading/drying the binder can also be separately carried out for improving productivity. In this case, a high-speed mixer such as a normal pressure kneader mixer, a double-screw kneader, a Henschel mixer or a super mixer or a blender can be used as a mixer, while a vibration dryer or a continuous fluid dryer can be used as a kneader/dryer.

The solvent may be evaporated by adding a substance obtained by dispersing the flake pigment in the binder having viscosity previously dissolved in the solvent to the resin powder and performing mixing/stirring.

The solvent for dissolving the binder having viscosity, which is not particularly restricted, must not dissolve and swell the resin powder, and preferably has a low boiling point. Thermosetting resin powder for powder coating is generally dissolved at 50°C to 80°C, and hence a low boiling point solvent which can be distilled away at a level less than the melting temperature of the thermosetting resin powder is preferable. Particularly preferably, further, the solvent is desirably completely removable under a vacuum at 40 to 50°C. Alkane such as hexane, heptane or octane, alcohol such as methanol, ethanol or propanol, organic halide such as carbon tetrachloride or water can be listed as a solvent satisfying this requirement.

The flake pigment mixed with the resin powder may be blended to be about 1 to 40 parts by mass in general, particularly 2 to 20 parts by mass per 100 parts by mass of the resin powder. There is such an apprehension that no sufficient metallicity and brightness can be obtained if the content of the flake pigment is less than 1 part by mass. Further, the coating thickness must be increased in order to obscure the substrate. If the content of the flake pigment exceeds 40 parts by mass, the manufacturing cost is increased, smoothness of the film is lost and the appearance is deteriorated.

The quantity of the added binder having viscosity is 1 to 5 mass % with respect to the obtained powder paint. Binding is so insufficient that free particles of the flake pigment remain in a large quantity if the quantity is less than 1 mass %, while blocking is remarkable if the quantity exceeds 5 mass %.

The quantity of the solvent for dissolving the binder, which is not particularly restricted, is preferably 2 to 50 mass % of mixed wet powder (resin powder + flake pigment + binder having viscosity + solvent). It is difficult to homogeneously mix the binder solution with the resin powder and the overall flake pigment if the quantity is less than 2 mass %. The mixed powder forms fluidic slurry and is hard to dry if the quantity exceeds 50 mass %.

As to a method of applying the powder paint according to the present invention, it is preferable to previously perform well-known treatment such as blasting or chemical conversion on the painted surface for bonding the powder paint and thereafter heating/hardening the same.

The coated material (substrate) is not particularly restricted but preferably causes neither deformation nor degeneration by baking. For example, a well-known metal such as iron, copper, aluminum or titanium or any alloy can be listed as a preferable one. As a specific mode, the coated material is utilized for an automobile body, stationery, a domestic appliance, sporting goods, a building material or an electric product, for example.

While flow dipping or electrostatic powder coating is applicable as a method of bonding the powder paint according to the present invention to the surface of the substrate, electrostatic powder coating excellent in coating efficiency is more preferable. A well-known method of a corona discharge system or a frictional electrification system can be employed as the method of electrostatic powder coating.

The heating temperature, which can be properly set in response to the type of the employed thermosetting resin powder, may be set to at least 120˚C in general, and preferably to 150 to 230˚C. The heating time, which can be properly selected in response to the heating temperature, may be set to at least 1 minute in general, and preferably to 5 to 30 minutes. A film formed by heating has a thickness of about 20 to 100 $\mu$m in general, although this is not restrictive.

In the present invention, brightness of the film is evaluated with an evaluation parameter $\beta/\alpha$. If aluminum flakes are used as the flake pigment for forming a silver-metallic film containing no coloring pigment or the like, the evaluation parameter is desirably as follows:

$$\beta/\alpha \geq 110$$

This evaluation parameter $\beta/\alpha$ is derived from the following equation (1):

$$\text{Equation (1): } L = [\beta/(\theta^2 + \alpha)] + \gamma$$

where L represents a brightness exponent (L*a*b* color measuring system (colorimetric system based on the uniform color space set by CIE in 1976) color-measured at an observation angle $\theta$ with a spectrophotometer (trade name: "X-Rite MA68" by X-Rite), $\theta$ represents the observation angle, and $\alpha$, $\beta$ and $\gamma$ represent constants.

The first term of the equation (1) corresponds to directional scattering specific to the metallic dependent on the observation angle $\theta$, and the second term corresponds to isotropic scattering independent of the observation angle $\theta$. The visual brightness correlates to the value L on a regular reflection position ($\theta = 0$) of directional scattering, i.e., $\beta/\alpha$, and hence $\beta/\alpha$ is used as the evaluation parameter for the brightness.

In relation to calculation of $\beta/\alpha$, $\alpha$, $\beta$ and $\gamma$ must be first decided. In the present invention, actually measured values L at observation angles $\theta$ of 15 degrees, 25 degrees, 45 degrees, 75 degrees and 110 degrees are first measured for deciding $\alpha$, $\beta$ and $\gamma$ by the least-squares method on the assumption that the values of $\theta$ and L follow the equation (1).

[Examples]

While the present invention is now described in more detail with reference to Examples, the present invention is not restricted to these.

<Example 1>

65.6 g of perfluorooctylethyl acrylate (LIGHT ACRYLATE FA-108 by Kyoeisha Chemical Co., Ltd.), 18.6 g of 2-methacryloyloxyethyl acid phosphate (LIGHT ESTER P-1M by Kyoeisha Chemical Co., Ltd.), 65.8 g of styrene and 350 g of cyclohexanone were introduced into a separable flask of 1 liter and stirred well for forming a homogeneous solution. 1.5 g of AIBN was added as a polymerization inhibitor and stirred/dissolved, and the inside of the system was thereafter sufficiently replaced with nitrogen. A viscous homogeneous transparent polymer solution was obtained by making reaction at 60°C for 20 hr with stirring.

The polymer was reprecipitated/purified by adding 240 g of ethanol to this solution and diluting the same, transferring the same to a dropping funnel and dropping the same in strongly stirred ethanol. As to the solvent used at this time, the quantity of ethanol was 2.5 liters with respect to 100 ml of the diluent. The precipitated polymer was a viscous gummy substance, which adhered to stirring blades and the inner wall of a container. The supernatant was removed by decantation, and the adhering polymer was recovered.

The recovered gummy polymer was redissolved in 250 g of acetone, and diluted with 500 g of hexane. This diluent was transferred to a dropping funnel and dropped in strongly stirred hexane for reprecipitating/purifying the polymer. As to the solvent used at this time, the quantity of hexane was 2.5 liters with respect to 170 g of the diluent. The precipitated polymer adhered to the stirring blades and the inner wall of the container, and hence the supernatant was removed by decantation for recovering the adhering polymer. The polymer was dried under a room temperature vacuum for one night, for obtaining 81.9 g of a copolymer (yield: 55 %). This copolymer is hereinafter referred to as a polymer A for the convenience of illustration.

The number-average molecular weight of the polymer A measured by GPC was 5600 in terms of polystyrene. The quantity of phosphorus and the quantity of fluorine were analyzed by ICP and ion chromatography respectively, for deciding the compositions of a polymerizable monomer unit having perfluoroalkyl groups and a polymerizable monomer unit having phosphate groups in the polymer.

The polymer A was composed of 11 mol % of the polymerizable monomer unit having perfluoroalkyl groups and 9 mol % of the polymerizable monomer unit having phosphate groups.


<Example 2>

4.0 g of perfluorooctylethyl acrylate, 1.1 g of 2-methacryloyloxyethyl acid phosphate, 2.4 g of styrene and 22.5 g of cyclohexanone were introduced into an Erlenmeyer flask of 100 ml and stirred well for forming a homogeneous solution. A viscous homogeneous transparent polymer solution was obtained by adding 0.08 g of AIBN and making reaction at 60°C for 20 hr. with stirring.

The obtained polymer solution was reprecipitated from 2 liters of hexane, and a precipitated viscous gummy substance was cleaned well with ethanol for extracting unreacted 2-methacryloyloxyethyl acid phosphate. Drying was performed under a room temperature vacuum for one night, for obtaining 4.4 g of a copolymer (yield: 58 %). This copolymer is hereinafter referred to as a polymer B for the convenience of illustration.

The molecular weight and the polymer composition were decided by analytical methods similar to those in Example 1. The polymer B had a number-average molecular weight of 2200 in terms of polystyrene, and was composed of 16 mol % of a polymerizable monomer unit having perfluoroalkyl groups and 13 mol % of a polymerizable monomer unit having phosphate groups.


<Example 3>

2.0 g of perfluorooctylethyl acrylate, 0.6 g of 2-methacryloyloxyethyl acid phosphate, 4.9 g of styrene and 22.5 g of cyclohexanone were introduced into an Erlenmeyer flask of 100 ml and stirred well for forming a homogeneous solution. A viscous homogeneous transparent polymer solution was obtained by adding 0.08 g of AIBN and making reaction at 60°C for 20 hr with stirring.

The obtained polymer solution was reprecipitated from 1.2 liters of ethanol, and the precipitated polymer was recovered through filtration and dried under a room temperature vacuum for one night for obtaining 2.3 g of a copolymer (yield: 30 %). This copolymer is hereinafter referred to as a polymer C for the convenience of illustration.

The molecular weight and the polymer composition were decided by analytical methods similar to those in Example 1. The polymer C had a number-average molecular weight of 12000 in terms of polystyrene, and was composed of 3 mol % of a polymerizable monomer unit having perfluoroalkyl groups and 4 mol % of a polymerizable monomer unit having phosphate groups.

<Example 4>

1.8 g of trifluoroethyl methacrylate (LIGHT ESTER M-3F by Kyoeisha Chemical Co., Ltd.), 1.1 g of 2-methacryloyloxyethyl acid phosphate, 3.8 g of styrene and 23.4 g of cyclohexanone were introduced into an Erlenmeyer flask of 100 ml and stirred well for forming a homogeneous solution. A viscous homogeneous transparent polymer solution was obtained by adding 0.07 g of AIBN and making reaction at 60˚C for 20 hr with stirring.

When the obtained polymer solution was reprecipitated from 3 liters of ethanol, the precipitated polymer entirely twined around the stirring shaft. This was recovered, dissolved in 10 g of acetone and reprecipitated from 2 liters of hexanone again. Substantially the total amount of the precipitated polymer twined around the stirring shaft, and this was recovered and dried under a room temperature vacuum for one night for obtaining 2.5 g of a copolymer (yield: 37 %). This copolymer is hereinafter referred to as a polymer D for the convenience of illustration.

The molecular weight and the polymer composition were decided by analytical methods similar to those in Example 1. The polymer D had a number-average molecular weight of 25000 in terms of polystyrene, and was composed of 16 mol % of a polymerizable monomer unit having perfluoroalkyl groups and 9 mol % of a polymerizable monomer unit having phosphate groups.

<Example 5>

3.5 g of perfluorooctylethyl acrylate, 0.5 g of 2-methacryloyloxyethyl acid phosphate, 3.6 g of methyl methacrylate (MMA) and 22.5 g of cyclohexanone were introduced into an Erlenmeyer flask of 100 mg and stirred well for forming a homogeneous solution. When 0.08 g of AIBN was added and reaction was made at 60˚C for 20 hr with stirring, a slightly whitened viscous polymer solution was obtained.

12 g of acetone was added to this solution for diluting the same. When the diluent was reprecipitated from 3 liters of ethanol, substantially the total amount of the precipitated polymer twined around the stirring shaft. This was recovered, cleaned with ethanol and then with hexane and dried under a room temperature vacuum for one night, for obtaining 6.2 g of a copolymer (yield: 82 %). This copolymer is hereinafter referred to as a polymer E for the convenience of illustration.

The molecular weight and the polymer composition were decided by analytical methods similar to those in Example 1. The polymer E had a number-average molecular weight of 200000 in terms of polystyrene, and was composed of 9 mol % of a polymerizable monomer unit having perfluoroalkyl groups and 4 mol % of a polymerizable monomer unit having phosphate groups.

<Comparative Example 1>

4.1 g of perfluorooctylethyl acrylate, 4.9 g of styrene and 21.0 g of cyclohexanone were introduced into an Erlenmeyer flask of 100 ml and stirred well for forming a homogeneous solution. A viscous homogeneous transparent polymer solution was obtained by adding 0.09 g of AIBN and making reaction at 60˚C for 20 hr with stirring. The obtained polymer solution was reprecipitated from 1 liter of ethanol, and the precipitated polymer was recovered through filtration and dried under a room temperature vacuum for one night for obtaining 5.6 g of a copolymer (yield: 62 %). This copolymer is hereinafter referred to as a polymer F for the convenience of illustration.

The molecular weight and the polymer composition were decided by analytical methods similar to those in Example 1. The polymer F had a number-average molecular weight of 3300 in terms of polystyrene, and the content of a polymerizable monomer unit having perfluoroalkyl groups was 10 mol %.

<Comparative Example 2>

1.0 g of 2-methacryloyloxyethyl acid phosphate, 4.4 g of styrene and 24.6 g of cyclohexanone were introduced into an Erlenmeyer flask of 100 ml and stirred well for forming a homogeneous solution. A viscous homogeneous transparent polymer solution was obtained by adding 0.05 g of AIBN and making reaction at 60˚C for 20 hr with stirring.

The obtained polymer solution was reprecipitated from 400 ml of hexane. The recovered gummy polymer was redissolved in 10 g of acetone and reprecipitated with 1 liter of ethanol. The precipitated polymer adhered to stirring blades or the inner wall of a container, and hence the supernatant was removed through decantation for recovering the adhering polymer. The polymer was dried under a room temperature vacuum for one night, for obtaining 1.6 g of a copolymer (yield: 30 %). This copolymer is hereinafter referred to as a polymer G for the convenience of illustration.

The molecular weight and the polymer composition were decided by analytical methods similar to those in Example 1. The polymer G had a number-average molecular weight of 6800 in terms of polystyrene, and the content of a polymerizable monomer unit having phosphate groups was 8 mol %.

Table 1 shows the results of the above.

[Table 1]

| | Polymer Designation | Molecular Weight | Polymer Composition (mol%) | | | | |
| --- | --- | --- | --- | --- | --- | --- | --- |
| | | | FA-108 | P-1M | styrene | M-3F | MMA |
| Example 1 | A | 5,600 | 11 | 9 | 80 | - | - |
| Example 2 | B | 2,200 | 16 | 13 | 71 | - | - |
| Example 3 | C | 12,000 | 3 | 4 | 93 | - | - |
| Example 4 | D | 25,000 | - | 9 | 75 | 16 | - |
| Example 5 | E | 200,000 | 9 | 4 | - | - | 87 |
| Comparative Example 1 | F | 3,300 | 10 | 0 | 90 | - | - |
| Comparative Example 2 | G | 6,800 | 0 | 8 | 92 | - | - |

<Example 6>

0.05 g of the polymer A was dissolved in 39 g of acetone, added to 25 g of resin-coated aluminum particles (PCF 7670A by Toyo Aluminium Kabushiki Kaisha) and kneaded at the room temperature for 10 min. The mixture was lidded so that no acetone evaporated, and left to stand at the room temperature for 3 hr as such. 500 ml of hexane was strongly stirred and the said paste was introduced into the same little by little to be dispersed. Slurry was filtrated, air-dried and thereafter passed through a screen having an aperture of 100 $\mu$m, for obtaining a polymer-coated resin-coated aluminum pigment.

This polymer-coated resin-coated aluminum pigment was blended with polyester thermosetting resin powder (trade name: Teodur PE 785-900 by Kuboko Paint Co., Ltd.) for preparing a powder metallic paint. The blending ratio was set to 8 g of the polymer-coated resin-coated aluminum pigment with respect to 100 g of the thermosetting resin. This blending ratio satisfies the conditions that the painted plate is completely obscured with the aluminum pigment and the surface is smooth.

Powder coating was performed with a corona discharge electrostatic powder coater (MXR-100VT-mini by Matsuo Sangyo Co., Ltd.) (applied voltage: 80 kV), and a painted plate was created by performing baking at 190˚C for 20 min.

The color tone of the film was evaluated with the parameter $\beta/\alpha$ calculated from a value L measured with X-Rite MA 68 (by X-Rite). $\beta/\alpha$ is a parameter corresponding to brightness and gloss of the painted plate. Consequently, $\beta/\alpha$ of the said painted plate was 189.

The painted plate completed in the above was further powder-coated with Teodur PE 785-900 and baked at 190˚C for 20 min. for forming a test painted plate.

This test painted plate was evaluated according to a cross-cut tape method (clearance interval: 2 mm, number of cells: 25) described in JIS K54008.5.2 (1996). The evaluation was made with ○×Δ, i.e. with ○ on 10 to 8 points, Δ on 6 to 4 points and × on 2 to 0 points in evaluation points of JIS. The result of secondary adhesion evaluation in this Example was ○.

<Examples 7 to 10>

Operations similar to that in the said Example 6 were performed except that the contents of the polymer A were varied. In color tone evaluation of a powder-coated plate, the painted plate must be completely obscured with an aluminum pigment, and the surface must be smooth. Therefore, blending ratios of thermosetting resin and treated products were adjusted to satisfy this condition.

<Comparative Example 3>

Resin-coated aluminum particles (PCF 7670) were powder-coated as such similarly to Example 6 with no polymer coating, for evaluating the color tone and secondary adhesion.

<Examples 11 and 12>

Operations similar to that in Example 8 were performed with the polymers B and C. In color tone evaluation of a powder-coated plate, the painted plate must be completely obscured with an aluminum pigment, and the surface must be smooth. Therefore, blending ratios of thermosetting resin and treated products were adjusted to satisfy this condition.

<Comparative Examples 4 and 5>

Operations similar to that in Example 8 were performed with the polymers F and G. In color tone evaluation of a powder-coated plate, the painted plate must be completely obscured with an aluminum pigment, and the surface must be smooth. Therefore, blending ratios of thermosetting resin and treated products were adjusted to satisfy this condition.

<Examples 13 and 14>

Operations similar to that in Example 8 were performed with the polymers D and E. In color tone evaluation of a powder-coated plate, the painted plate must be completely obscured with an aluminum pigment, and the surface must be smooth. Therefore, blending ratios of thermosetting resin and treated products were adjusted to satisfy this condition.

<Example 15>

A solution prepared by dissolving 0.5 g of the polymer A in 48 g of acetone was added to paste prepared by sufficiently cleaning aluminum paste (7670 NS by Toyo Aluminium Kabushiki Kaisha) with mineral spirit and filtrating the same (nonvolatile component: 64 %), and sufficiently kneaded. The mixture was lidded so that no acetone evaporated, and left to stand at the room temperature for 3 hr as such. 1 liter of hexane was strongly stirred and the said paste was introduced into the same little by little, to be dispersed. Slurry was filtrated, air-dried and thereafter passed through a screen having an aperture of 100 $\mu$m for obtaining an aluminum pigment coated with a finishing agent according to the present invention.
Evaluation by powder coating was performed similarly to that in Example 6. In color tone evaluation of a powder-coated plate, the painted plate must be completely obscured with an aluminum pigment, and the surface must be smooth. Therefore, a blending ratio of thermosetting resin and a treated product was adjusted to satisfy this condition.
The difference between PCF 7670 used in Examples 6 to 14 and 7670 NS used in Example 15 resides in that the former is resin-coated aluminum particles while the latter is untreated aluminum particles.

<Example 16>

6.0 g of the resin-coated aluminum pigment treated with the finishing agent according to the present invention obtained in Example 8 and Teodur PE 785-900 were blended with each other. 1.5 g of YS Polyster TH-130 by Yasuhara Chemical Co., Ltd. was dissolved in 24.7 g of heptane as a binder and added to the said dry blend. The mixture was naturally dried with kneading, introduced into a Kjeldahl flask of 1 liter when forming powder having flowability and vacuum-dried in an evaporator for completely removing heptane, thereby obtaining bonded aluminum.
Evaluation by powder coating was performed similarly to that in Example 6.

<Example 17>

An operation similar to that in Example 16 was performed except that an aluminum pigment treated with the finishing agent according to the present invention obtained in Example 15 was employed.

<Comparative Example 6>

169.1 g of paste (nonvolatile component: 53 %) obtained by sufficiently cleaning aluminum paste 7670 NS with Merveille and filtrating the same was dispersed in 524.0 g of Merveille. 16.2 g of FA-108 and 1.8 g of trimethylolpropane triacrylate (trade name: TMP-3A by Osaka Organic Chemical Industry Ltd.) were added thereto. The mixture was sufficiently nitrogen-exchanged with stirring, and thereafter heated to 80°C. 0.6 g of AIBN was added and the mixture was reacted at 80°C for 18 hours while continuing the stirring. The obtained dispersed solution was filtrated, cleaned with Merveille, thereafter solvent-exchanged with hexane, naturally dried to be powdered, and passed through a screen having an aperture of 100 $\mu$m.
When the obtained powder metallic pigment was partially dissolved in acid for measuring the quantity of resin covering the surface, it was recognized that 100 g of raw aluminum was covered with 14 g of resin. This resin-coated powder metallic pigment is designated as a fluororesin-coated product. This fluororesin-coated product was employed for powder coating similar to that in Example 6 and evaluated. The blending ratio was set to 6 g of the powder aluminum pigment with respect to 100 g of thermosetting resin. This blending ratio satisfies the conditions that the painted plate is completely obscured with the aluminum pigment and the surface is smooth.

Table 2 shows the aforementioned flake pigments of Examples 6 to 17 and comparative examples 3 to 6, conditions for preparing paints and evaluation results of films thereof Referring to Table 2, the contents of agents express the contents of the polymer $\underline{A}$ added to the resin-coated aluminum pigments in percentage.

[Table 2]

| | Type of Used Aluminum Flake | Type of Used Polymer | Content of Agent (%) | Mode of Paint | Blending Ratio (PHR) | β/α | Secondary Adhesion |
|---|---|---|---|---|---|---|---|
| Example 6 | PCF7670 | A | 0.2 | dry blend | 8.0 | 189 | ○ |
| Example 7 | PCF7670 | A | 0.5 | dry blend | 5.5 | 202 | ○ |
| Example 8 | PCF7670 | A | 1.0 | dry blend | 3.5 | 215 | ○ |
| Example 9 | PCF7670 | A | 2.0 | dry blend | 3.0 | 218 | ○ |
| Example 10 | PCF7670 | A | 5.0 | dry blend | 3.0 | 181 | ○ |
| Example 11 | PCF7670 | B | 1.0 | dry blend | 4.5 | 197 | ○ |
| Example 12 | PCF7670 | C | 1.0 | dry blend | 4.0 | 210 | ○ |
| Example 13 | PCF7670 | D | 1.0 | dry blend | 7.0 | 178 | ○ |
| Example 14 | PCF7670 | E | 1.0 | dry blend | 6.0 | 219 | ○ |
| Example 15 | 7670NS | A | 1.0 | dry blend | 6.0 | 262 | ○ |
| Example 16 | PCF7670 | A | 1.0 | bonded | 6.0 | 189 | ○ |
| Example 17 | 7670NS | A | 1.0 | bonded | 6.0 | 201 | ○ |
| Comparative Example 3 | pCF7670 | - | - | dry blend | 13.0 | 140 | ○ |
| Comparative Example 4 | PCF7670 | F | 1.0 | dry blend | 11.0 | 155 | ○ |
| Comparative Example 5 | pCF7670 | G | 1.0 | dry blend | 6.5 | 151 | ○ |
| Comparative Example 6 | 7670NS | fluororesin coat | 14(quantity of fluororesin) | dry blend | 6.0 | 259 | × |

The effects of the copolymer shown in the present invention are obvious from the aforementioned results of Examples 6 to 10 and comparative example 3, and it is understood that aluminum particles coated with this copolymer can form a powder-coated film having remarkably excellent brightness. Further, a secondary adhesion failure caused when utilizing alkyl fluoride groups is also overcome.

As obvious from the results of Examples 11 and 12 and comparative examples 5 and 6, it is understood that the fluoric polymerizable monomer having alkyl fluoride groups and the polymerizable monomer having phosphate groups are essential ingredients for completing the present invention. In comparative example 3, a filtrate filtrating slurry was whitened and hence it was recognized that the finishing agent was not adsorbed to the aluminum particles. In other words, the monomer unit having phosphate groups conceivably functions as an adsorption site. The polymerizable monomer unit having alkyl fluoride groups causes leafing of the aluminum pigment due to strong water repellency thereof and develops high brightness of the film.

As obvious from the results of Examples 13 and 14, the fluoric polymerizable monomer having alkyl fluoride groups for completing the present invention is independent of the chain length of the alkyl fluoride groups. Further, at least one polymerizable monomer other than the fluoric polymerizable monomer having alkyl fluoride groups and the polymerizable monomer having phosphate groups is not restricted to a specific monomer.

As obvious from the results of Examples 15, 16 and 17, the copolymer according to the present invention is independent of the surface state of a treated object. In the category of the powder paint, the effects thereof appear regardless of the difference between the dry blend mode and the bonded mode. A fluororesin-coated product attaining high brightness is remarkably inferior in secondary adhesiveness.

While the present invention has been illustrated and described in detail, it will be clearly understood that this is only for the purpose of illustration and not to be taken as limitation but the spirit and scope of the present invention are limited by only the attached scope of claim for patent.

Industrial Applicability

From the aforementioned results, the flake pigment according to the present invention is a flake pigment preferably usable in a powder paint, supplying a film with excellent metallicity and high brightness and further providing excellent secondary adhesiveness.

Further, the paint according to the present invention is a paint supplying a film with excellent metallicity and high brightness and further providing excellent secondary adhesiveness.

In addition, the powder paint according to the present invention is a powder paint supplying a film with excellent metallicity and high brightness and further providing excellent secondary adhesiveness.

And the finishing agent according to the present invention is a finishing agent for flake particles for creating a flake pigment preferably usable in a powder paint, supplying a film with excellent metallicity and high brightness and further providing excellent secondary adhesiveness.

**Claims**

1. A flake pigment comprising base particles composed of flake particles and a single-layer or double-layer coat covering the surface of each said base particle, wherein at least one layer of said single-layer or double-layer coat is made of a resin composition containing a copolymer comprising a bond unit arising from a fluoric polymerizable monomer having alkyl fluoride groups and a bond unit arising from a polymerizable monomer having phosphate groups.

2. The flake pigment according to claim 1, wherein said copolymer is a copolymer comprising the bond unit arising from the fluoric polymerizable monomer having alkyl fluoride groups and the bond unit arising from the polymerizable monomer having phosphate groups, as well as at least one bond unit arising from a polymerizable monomer other than said bond units.

3. The flake pigment according to claim 2, wherein at least one bond unit arising from the polymerizable monomer other than the bond unit arising from the fluoric polymerizable monomer having alkyl fluoride groups and the bond unit arising from the polymerizable monomer having phosphate groups is styrene or methyl methacrylate.

4. The flake pigment according to claim 1, wherein said fluoric polymerizable monomer having alkyl fluoride groups is perfluorooctylethyl acrylate, and said polymerizable monomer having phosphate groups is 2-methacryloyloxyethyl acid phosphate or 2-acryloyloxyethyl acid phosphate.

5. The flake pigment according to claim 1, wherein the content of said bond unit arising from the fluoric polymerizable monomer having alkyl fluoride groups is in the range of 1 to 40 mol %, the content of said bond unit arising from the polymerizable monomer having phosphate groups is in the range of 1 to 30 mol % and the number average molecular weight is in the range of 1000 to 500000 in said copolymer.

6. The flake pigment according to claim 1, wherein said copolymer is a copolymer soluble in a solvent.

7. The flake pigment according to claim 1, wherein said flake particles are flake particles composed of a material containing aluminum or an aluminum alloy.

8. A paint containing the flake pigment according to claim 1 and a binder.

9. A powder paint containing the flake pigment according to claim 1 and thermosetting resin powder.

10. A powder paint containing thermosetting resin powder prepared by bonding the flake pigment according to claim 1 to the surface through a binder having viscosity.

11. A finishing agent for flake particles comprising a resin composition containing a copolymer comprising a bond unit arising from a fluoric polymerizable monomer having alkyl fluoride groups and a bond unit arising from a polymerizable monomer having phosphate groups.

**Patentansprüche**

1. Flockenförmiges Pigment, das Basispartikel, die aus flockenförmigen Partikein bestehen, und eine einlagige oder doppellagige Beschichtung aufweist, welche die Oberfläche eines jeden Basispartikels überzieht, wobei mindestens eine Schicht der einlagigen oder doppellagigen Beschichtung aus einer Harzzusammensetzung besteht, die ein Copolymer enthält, das einen Baustein (bond unit), der von einem fluorhaltigen polymerisierbaren Monomer stammt, das Alkylfluoridgruppen aufweist, und einen Baustein aufweist, der von einem Phosphatgruppen aufweisenden polymerisierbaren Monomer stammt.

2. Flockenförmiges Pigment nach Anspruch 1, bei dem das Copolymer ein Copolymer ist, das den Baustein, der von dem fluorhaltigen polymerisierbaren Monomer stammt, das Alkylfluoridgruppen aufweist, und den Baustein, der von dem Phosphatgruppen aufweisenden polymerisierbaren Monomer stammt, sowie mindestens einen Baustein aufweist, der von einem polymerisierbaren Monomer außer diesen Bausteinen stammt.

3. Flockenförmiges Pigment nach Anspruch 2, bei dem mindestens ein Baustein, der von dem polymerisierbaren Monomer stammt, außer dem Baustein, der von dem fluorhaltigen polymerisierbaren Monomer stammt, das Alkylfluoridgruppen aufweist, und dem Baustein, der von dem Phosphatgruppen aufweisenden polymerisierbaren Monomer stammt, Styrol oder Methylmethacrylat ist.

4. Flockenförmiges Pigment nach Anspruch 1, bei dem das fluorhaltige polymerisierbare Monomer, das Alkylfluoridgruppen aufweist, Perfluoroctylethylacrylat ist, und das polymerisierbare Monomer, das Phosphatgruppen aufweist, 2-Methacryloyloxyethylsäurephosphat oder 2-Acryloyloxyethylsäurephosphat ist.

5. Flockenförmiges Pigment nach Anspruch 1, bei dem der Gehalt des Bausteins, der von dem fluorhaltigen polymerisierbaren Monomer stammt, das Alkylfluoridgruppen aufweist, zwischen 1 bis 40 Mol-% beträgt, der Gehalt des Bausteins, der von dem polymerisierbaren Monomer stammt, das Phosphatgruppen aufweist, zwischen 1 bis 30 Mol-% beträgt, und die durchschnittliche Molekulargewichtzahl im Copolymer zwischen 1000 bis 500000 beträgt.

6. Flockenförmigen Pigment nach Anspruch 1, bei dem das Copolymer ein in einem Lösungsmittel lösliches Copolymer ist.

7. Flockenförmiges Pigment nach Anspruch 1, bei dem die flockenförmigen Partikel flockenförmige Partikel sind, die aus einem Material bestehen, das Aluminium oder eine Aluminiumlegierung enthält.

8. Lack, der das Flockenpigment nach Anspruch 1 und ein Bindemittel enthält.

9. Pulverlack, der das flockenförmige Pigment nach Anspruch 1 und ein aus wärmehärtendem Harz bestehendes Pulver enthält.

10. Pulverlack, der ein aus wärmehärtendem Harz bestehendes Pulver enthält, das **dadurch** hergestellt wird, dass das flockenförmige Pigment nach Anspruch 1 an die Oberfläche mittels eines Viskosität aufweisenden Bindemittels gebunden wird.

11. Finishing-Mittel für flockenförmige Partikel, aufweisend: eine Harzzusammensetzung, die ein Copolymer enthält, das einen Baustein, der von einem fluorhaltigen polymerisierbaren Monomer stammt, das Alkylfluoridgruppen aufweist, und einen Baustein aufweist, der von einem Phosphatgruppen aufweisenden polymerisierbaren Monomer stammt.

**Revendications**

1. Pigment sous forme de paillettes comprenant des particules de base composées de particules en paillettes et d'un revêtement monocouche ou double couche couvrant la surface de chacune desdites particules de base, dans lequel au moins une couche dudit revêtement monocouche ou double couche est constituée d'une composition de résine contenant un copolymère comprenant une unité de liaison issue d'un monomère polymérisable fluoré ayant des groupes fluorure d'alkyle et une unité de liaison issue d'un monomère polymérisable ayant des groupes phosphate.

2. Pigment sous forme de paillettes selon la revendication 1, dans lequel ledit copolymère est un copolymère comprenant l'unité de liaison issue du monomère polymérisable fluoré ayant des groupes fluorure d'alkyle et l'unité de liaison issue du monomère polymérisable ayant des groupes phosphate, ainsi qu'au moins une unité de liaison issue d'un monomère polymérisable autre que lesdites unités de liaison.

3. Pigment sous forme de paillettes selon la revendication 2, dans lequel au moins une unité de liaison issue du monomère polymérisable autre que l'unité de liaison issue du monomère polymérisable fluoré ayant des groupes fluorure d'alkyle et que l'unité de liaison issue du monomère polymérisable ayant des groupes phosphate est le styrène ou le méthacrylate de méthyle.

4. Pigment sous forme de paillettes selon la revendication 1, dans lequel ledit monomère polymérisable fluoré ayant des groupes fluorure d'alkyle est un acrylate de perfluorooctyléthyle, et ledit monomère polymérisable ayant des groupes phosphate est un phosphate d'acide de 2-méthacryloyloxyéthyle ou phosphate d'acide de 2-acryloyloxyéthyle.

5. Pigment sous forme de paillettes selon la revendication 1, dans lequel la teneur en ladite unité de liaison issue du monomère polymérisable fluoré ayant des groupes fluorure d'alkyle est dans la plage de 1 à 40 % mol, la teneur en ladite unité de liaison issue du monomère polymérisable ayant des groupes phosphate est dans la plage de 1 à 30 % mol et la masse moléculaire moyenne en nombre est dans la plage de 1 000 à 500 000 dans ledit copolymère.

6. Pigment sous forme de paillettes selon la revendication 1, dans lequel ledit copolymère et un copolymère soluble dans un solvant.

7. Pigment sous forme de paillettes selon la revendication 1, dans lequel lesdites particules en paillettes sont des particules en paillettes composées d'un matériau contenant de l'aluminium ou un alliage d'aluminium.

8. Peinture contenant le pigment sous forme de paillettes selon la revendication 1 et un liant.

9. Peinture en poudre contenant le pigment sous forme de paillettes selon la revendication 1 et une poudre de résine thermodurcissable.

10. Peinture en poudre contenant une poudre de résine thermodurcissable préparée en liant le pigment sous forme de paillettes selon la revendication 1 à la surface par le biais d'un liant présentant une viscosité.

11. Agent de finition pour particules en paillettes comprenant une composition de résine contenant un copolymère comprenant une unité de liaison issue d'un monomère polymérisable fluoré ayant des groupes fluorure d'alkyle et une unité de liaison issue d'un monomère polymérisable ayant des groupes phosphate.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003213157 A
- JP 2002013212 A
- JP 51137725 A
- JP 57035214 A
- JP 9071734 A
- US 4138511 A
- JP 2001029877 A
- WO 02094950 A1